# EUROPÄISCHE PATENTSCHRIFT

(11) **EP 0 374 362 B1**
(45) Veröffentlichungstag und Bekanntmachung des Hinweises auf die Patenterteilung: **08.06.1994**
(21) Anmeldenummer: 89115043.5
(22) Anmeldetag: 16.08.1989
(51) Int. Cl.: H01R 35/02, H02G 11/00, B66C 13/12

(54) **Bewegliche Kabelverbindung**
Movable cable connection
Connexion mobile de câbles

(30) Priorität: 23.12.1988 DE 3843479
(43) Veröffentlichungstag der Anmeldung: 27.06.1990
(73) Patentinhaber: Haake, André, D-46354 Südlohn (DE); Haake, Oliver, D-46354 Südlohn (DE); Haake, Patrick, D-48691 Vreden (DE)
(72) Erfinder: Haake, André, D-46354 Südlohn (DE); Haake, Oliver, D-46354 Südlohn (DE); Haake, Patrick, D-48691 Vreden (DE)
(74) Vertreter: Habbel, Hans-Georg, Dipl.-Ing.

(56) Entgegenhaltungen:
- DE-B- 1 239 539
- DE-C- 1 065 050
- DE-C- 1 091 165
- GB-A- 2 096 568

## Beschreibung

Die Erfindung bezieht sich auf eine bewegliche Kabelverbindung gemäß dem Oberbegriff des Hauptanspruches.

Bewegliche Kabelverbindungen sind beispielsweise aus der DE-A-10 36 372 bekannt. Bei dieser bekannten Anordnung werden die biegsamen Stromleitungen durch aufgesetzte gelochte Perlen od. dgl. geschützt. Diese bekannte Anordnung dient insbesondere für die Stromzuführung von Kohlebürsten, ist also nicht für besonders große Bewegungen geeignet.

Bei der Stromzuführung zu Schließkontaktsicherungen, beispielsweise bei Rolltoren od. dgl., werden sogenannte Wendelkabel eingesetzt, die anschließend an einen ortsfesten Kontakt anderenendes an das bewegliche Tor anschließen und die Auf- und Abwärtsbewegung des Tores mitmachen. Diese Wendelkabel sind empfindlich und können die in die Torkanten eingebauten Schließkantensicherungen hinsichtlich der Funktion durch Beschädigung od. dgl. in Frage stellen. Sie unterliegen einer Quetschgefahr, die einen Kurzschluß zur Folge haben kann und dieser Kurzschluß setzt die selbstüberwachende Ruhestromunterbrechung außer Kraft.

Aus der DE-B-12 39 539 ist eine Vorrichtung zur Führung und Lagerung von energieführenden Leitungen bekanntgeworden, bei welcher ein vom Verbraucher in Fahrtrichtung und Geschwindigkeit abhängiger Stützwagen vorgesehen ist, der zudem einen vom Verbraucher leistungsmäßig unabhängigen Antrieb aufweist. Eine solche bekannte Vorrichtung wird insbesondere bei langen Verfahrwegen des Verbrauchers und langen Kabeln in Verbindung mit Kabelwagen benötigt, ist aber mit der erfindungsgemäßen Vorrichtung, die sich insbesondere auf Schließkontaktsicherungen, beispielsweise bei Rolltoren u. dgl. bezieht, nicht vergleichbar.

Der Erfindung liegt die Aufgabe zugrunde, eine bewegliche Stromzuführung zu Schließkantensicherungen an Torelementen zu schaffen, die kurzschlußsicher und selbstüberwachend sind.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird vorgerschlagen, ausgehend von den bekannten biegsamen mit aufgesetzten Kugelkörpern ausgerüsteten Stromleitungen diese geschützten elektrischen Leiter in einer Führungsschiene unterzubringen, und zwar dort in zwei vorgesehenen Kabelkanälen, wobei in der Führungsschiene weiterhin sich ein sogenannter Kabelwagen führt. Die elektrischen Leiter sind dabei einenendes ortsfest an der Führungsschiene angeschlossen und schließen anderenendes an den beweglichen Kabelwagen an und können mit diesem innerhalb der Führungsschiene beispielsweise auf- und abgefahren werden.

Durch diese Anordnung wird eine einwandfreie Führung der Kabel erreicht und diese Kabel können nicht beschädigt werden, wobei der Kabelwagen für eine einwandfreie Übertragung der Bewegung auf die beweglichen Stromleiter sorgt.

Ein Ausführungsbeispiel der Erfindung wird nachfolgend anhand der Zeichnung erläutert. Die Zeichnung zeigt dabei in
- Fig. 1: im Längsschnitt die Führungsschiene mit eingesetztem Kabelwagen, in
- Fig. 2: einen Schnitt gemäß der Linie 2 - 2 in Fig. 1.

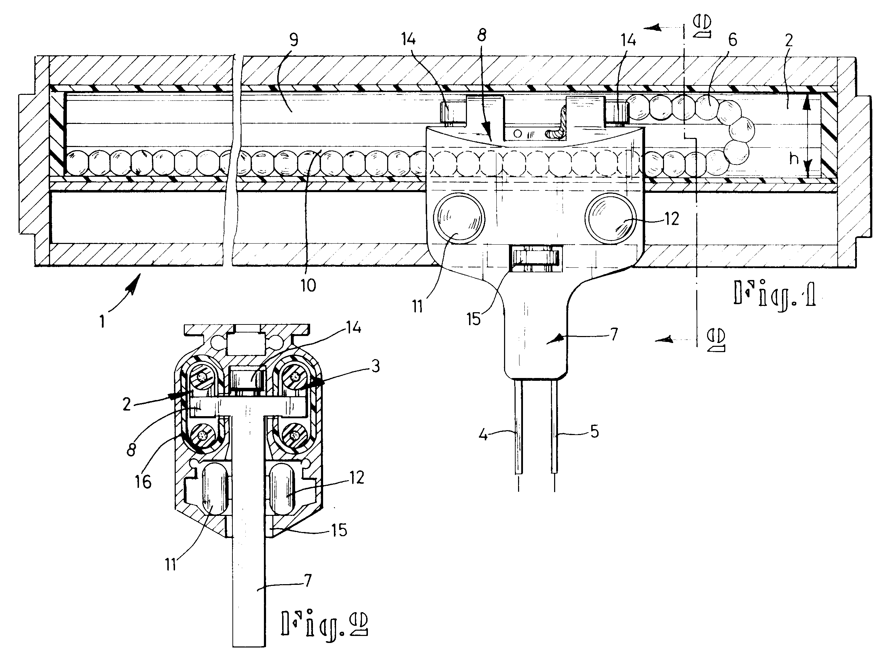

In der Zeichnung ist eine Führungsschiene 1 dargestellt, die beispielsweise aus entsprechendem Kunststoff bestehen kann. In dieser Führungsschiene sind zwei Kabelkanäle 2 und 3 ausgeformt, die eine Höhe h aufweisen, wie aus Fig. 1 ersichtlich ist. Mit 4 und 5 sind zwei elektrische Leiter dargestellt, die an einen Kabelwagen 7 anschließen, der sich innerhalb der Führungsschiene 1 führt. Die elektrischen Leiter 4 und 5 schließen einenendes (aus der Zeichnung nicht erkennbar) ortsfest im Bereich der Führungsschiene an und das andere Ende der elektrischen Leiter 4 und 5 schließt an den Kabelwagen 7 an und führt von diesem aus zu den in der Fig. 1 erkennbaren Anschlüssen.

Innerhalb der Kabelkanäle 2 und 3 im Bereich der Führungsschiene 1 sind die elektrischen Leiter 4 und 5 mit Abstandskörpern 6 ausgerüstet. Hierfür weisen die Abstandskörper 6 eine mittlere Bohrung auf, deren Mündung im Bereich des Umfanges der Abstandskörper sich erweitert, und zwar in Anpassung an die erforderliche Umbiegung der elektrischen Leiter innerhalb der Kabelkanäle 2 und 3.

Der Kabelwagen 7 weist einen Anschluß- und Gleitkörper 8 auf, der die jeweiligen Kabelkanäle 2 und 3 unterteilt in einen oberen Teil 9 und einen unteren Teil 10.

Aus Fig. 1 ist ersichtlich, daß die größere Länge des innerhalb des dort sichtbaren Kabelkanals 2 befindlichen elektrischen Leiter mit Abstandskörpern 6 im unteren Teil des Kabelkanales liegt, während durch die Bewegung des Kabelwagens 2 dieser Teil in einen oberen Teil umgelenkt wird, der vom Kabelwagen 7 gezogen wird.

Der Kabelwagen 7 führt sich mit um horizontale Achsen umlaufenden Laufrollen 11 und 12 in entsprechenden Führungen der Führungsschiene 1. Weiterhin trägt der Kabelwagen 7 um vertikale Achsen umlaufende Führungsrollen 14 und 15, wobei im oberen Bereich des Kabelwagens 7 zwei Führungsrollen 14 im Abstand voneinander vorgesehen sind.

Hierdurch wird eine sichere und einwandfreie Führung des Kabelwagens 7 in der Führungsschiene 1 erreicht.

## Patentansprüche

1. Bewegliche Kabel verbindung mit wenigstens einem elektrischen Leiter (4, 5) mit an seinen beiden Längsenden angeordneten Anschlußkontakten und auf dem Leiter angeordneten, gegeneinander beweglichen Abstandskörpern (6), dadurch gekennzeichnet, daß
a) eine Führungsschiene (1) vorgesehen ist mit wenigstens einem Kabelkanal (2, 3), der eine solche Höhe (h) aufweist, daß mindestens zwei Abstandskörper (6) übereinander in ihm Platz haben,
b) das eine Leitungsende des Leiters (4, 5) ortsfest am Ende des Kabelkanals (2, 3) angeordnet ist,
c) das andere Leitungsende an einen Kabelwagen (7) anschließt, der mit einem Anschluß- und Gleitkörper (8) in den Kabelkanal (2, 3) eingreift.

2. Kabelverbindung nach Anspruch 1, dadurch gekennzeichnet, daß der Anschluß- und Gleitkörper (8) des Kabelwagens (7) im Bereich des Kabelkanales (2, 3) diesen in einen unteren und oberen Teil (9, 10) unterteilt, wobei der in den Kabelkanal greifende Anschluß- und Gleitkörper an seiner Unterseite abgerundet oder keilförmig ausgebildet ist.

3. Kabelverbindung nach Anspruch 1 oder 2, dadurch gekennzeichnet, daß der Kabelwagen sich mit um horizontale Achsen umlaufenden Laufrollen (11, 12) und um vertikale Achsen umlaufenden Führungsrollen (14, 15) an der Führungsschiene (1) abstützt.

4. Kabelverbindung nach einem oder mehreren der vorhergehenden Ansprüche, dadurch gekennzeichnet, daß die Führungsschiene (1) wenigstens im Bereich der Kabelkanäle (2, 3) auf der Innenseite der Kabelkanäle (2, 3) eine elektrisch isolierende Wandung (16) aufweist.

5. Kabelverbindung nach einem oder mehreren der vorhergehenden Ansprüche, dadurch gekennzeichnet, daß die Abstandskörper (6) als Kugelkörper ausgebildet sind, die eine mittlere Bohrung aufweisen, wobei die Mündung der Bohrung im Bereich der Wandung der Abstandskörper (6) erweitert ist und der zu erwartenden Krümmung der elektrischen Leiter (4, 5) angepaßt ist.

## Claims

1. A movable cable connection comprising at least one electrical conductor (4, 5) with connection contacts arranged at its two longitudinal ends and spacer members (6), movable with respect to each other, arranged on the conductor, characterized in that
a) a guide rail (1) is provided, with at least one cable duct (2, 3) of a height (h) to provide space inside it for at least two spacer members (6) above one another,
b) the one line end of the conductor (4, 5) is arranged fixedly at the end of the cable duct (2, 3),
c) the other line end adjoins a cable trolley (7), which engages in the cable duct (2, 3) with a connecting and sliding member (8).

2. A cable connection according to claim 1, characterized in that in the region of the cable duct (2, 3) the connecting and sliding member (8) of the cable trolley (7) subdivides the cable duct into a lower and an upper part (9, 10), the connecting and sliding member engaging in the cable duct being of rounded or wedge-shaped construction on its underside.

3. A cable connection according to claim 1 or claim 2, characterized in that the cable trolley is supported on the guide rail (1) by rollers (11, 12) revolving about horizontal axes and castors (14, 15) revolving about vertical axes.

4. A cable connection according to any one of the preceding claims, characterized in that, at least in the area of the cable ducts (2, 3), the guide rail (1) comprises an electrically insulating wall (16) on the inside of the cable ducts (2, 3).

5. A cable connection according to any one of the preceding claims, characterized in that the spacer members (6) are constructed as ball members, which comprise a central bore, the mouth of the bore being enlarged in the area of the wall of the spacer members (6) and being conformed to the expected curvature of the electrical conductors (4, 5).

## Revendications

1. Liaison mobile par câbles comprenant au moins un conducteur électrique (4, 5) muni de contacts de connexion disposés à ses deux extrémités longitudinales et de corps entretoises (6) montés sur le conducteur et mobiles les uns par rapport aux autres, caractérisée en ce que
a) il est prévu un rail de guidage (1) muni d'au moins un canal de câbles (2, 3) qui possède une hauteur (h) telle qu'au moins deux corps entretoises (6) y trouvent place l'un au-dessus de l'autre,
b) l'une des extrémités conductrices du conducteur (4, 5) est disposée en position fixe à l'extrémité du canal de câbles (2, 3),
c) l'autre extrémité conductrice se connecte à un chariot de câbles (7) qui est engagé dans le canal de câbles (2, 3) par un corps de connexion et glissant (8).

2. Liaison par câbles selon la revendication 1, caractérisée en ce que, dans la région du canal de câbles (2, 3), le corps de connexion et glissant (8) du chariot de câbles (7) subdivise ce canal en une partie inférieure et une partie supérieure (9, 10), le corps de connexion et glissant engagé dans le canal de câbles étant arrondi ou en forme de coin au niveau de sa face inférieure.

3. Liaison par câbles selon la revendication 1 ou 2, caractérisée en ce que le chariot de câbles prend appui sur le rail de guidage (1) par des galets roulants (11, 12) qui tournent autour d'axes horizontaux et par des galets de guidage (14, 15) qui tournent autour d'axes verticaux.

4. Liaison par câbles selon une ou plusieurs des revendications précédentes, caractérisée en ce que le rail de guidage (1) présente, une paroi (16) isolante de l'électricité, au moins dans la région des canaux de câbles (2, 3), sur le côté intérieur des canaux de câbles (2, 3).

5. Liaison par câbles selon une ou plusieurs des revendications précédentes, caractérisée en ce que les corps entretoises (6) sont constitués par des corps sphériques qui présentent un perçage central, le débouché du perçage étant évasé dans la région de la paroi des corps entretoises (6), et qui est adapté à la courbure envisagée des conducteurs électriques (4, 5).
